# EUROPÄISCHE PATENTANMELDUNG

(11) **EP 4 309 946 A1**
(43) Veröffentlichungstag der Anmeldung: **24.01.2024**
(21) Anmeldenummer: 22186313.7
(22) Anmeldetag: 21.07.2022
(51) Int. Cl.: B60L 5/39, B60L 5/38

(54) **FESTSTELLVORRICHTUNG FÜR EINEN STROMABNEHMER**

(71) Anmelder: Schunk Transit Systems GmbH, 35435 Wettenberg (DE)
(72) Erfinder: Figan, Alexandru-Ioan, 57562 Herdorf (DE); Sommer, Martin, 35096 Weimar (DE); Gros, Frederic, 35578 Wetzlar (DE)
(74) Vertreter: advotec.

(57) **Zusammenfassung**

Die Erfindung betrifft eine Feststellvorrichtung zur Sicherung einer zwischen einer Verwahrlage und einer Schleifkontaktlage relativ zu einer Stromschiene beweglichen Schleifstückeinrichtung eines Stromabnehmers in Verwahrlage, wobei die Feststellvorrichtung einen Nocken (31), eine drehbar gelagerte Welle (32) und eine Verdrehsicherung (33) aufweist, wobei der Nocken (31) drehfest an der Welle (32) angeordnet ist und der Nocken (31) durch Drehung der Welle (32) von einer Freigabeposition in eine Feststellposition bewegbar ist,
und wobei der Nocken (31) in Verwahrlage der Schleifstückeinrichtung durch Überführung in die Feststellposition am Stromabnehmer, bevorzugt an einer Wippeneinheit des Stromabnehmers, mit einer ersten Anlagefläche derart zur Anlage bringbar ist, dass eine Bewegung der Schleifstückeinrichtung relativ zur Stromschiene gesperrt ist, und wobei eine Drehbewegung der Welle (32) zur Sicherung des Nockens (31) in der Freigabeposition oder der Feststellposition mittels der Verdrehsicherung (33) formschlüssig gesperrt ist.

## Beschreibung

Die Erfindung betrifft eine Feststellvorrichtung und ein Verfahren zur Sicherung einer zwischen einer Verwahrlage und einer Schleifkontaktlage relativ zu einer Stromschiene beweglichen Schleifstückeinrichtung eines Stromabnehmers in Verwahrlage.

Stromabnehmer und Verfahren zum Betrieb eines Stromabnehmers mit eine Schleifstückeinrichtung, deren Schleifstück in Schleifkontaktlage gegen eine Stromschiene gedrückt wird, sind aus dem Stand der Technik hinreichend bekannt und werden regelmäßig an Schienenfahrzeugen zur Übertragung elektrischer Energie von einer Stromschiene auf ein Schienenfahrzeug verwendet. Die Stromschiene ist üblicherweise im Bereich der Fahrschienen angeordnet und wird auch als sogenannte dritte Schiene bezeichnet. Bei den bekannten Stromabnehmern ist ein Schleifstück an einer Schwinge bzw. einer Wippe oder einer aus Gelenken gebildeten Führung angeordnet, welche zur Befestigung und Bewegung des Schleifstücks relativ zu der Stromschiene dient. Mittels dieser mechanischen Aufhängung des Schleifstücks kann das Schleifstück mit einer definierten Andruckkraft auf eine Schleifkontaktfläche der Stromschiene gedrückt werden und so in eine Schleifkontaktlage überführt werden. Hierbei wird zwischen Stromschienen bzw. Stromabnehmern unterschieden, deren Schleifstück in Schleifkontaktlage an eine Oberseite der Stromschiene, an eine Unterseite der Stromscheine oder an eine Seitenfläche der Stromschiene gedrückt wird. Das Schleifstück kann durch Auf- oder Anfahren des Schleifstücks auf die Stromschiene, meist über eine Anlauframpe, mit der Stromschiene kontaktiert werden, wobei die Schwinge bzw. Wippe oder Gelenkführung dann über das Schleifstück zurückgedrückt und so die erforderliche Andruckkraft von einer Federeinrichtung aufgebracht werden kann. Die Federeinrichtung kann als eine mechanische Dreh-, Schrauben- oder Gummifeder ausgebildet sein.

Zudem kann die Schleifstückeinrichtung mittels der Schwinge bzw. Wippe oder der aus Gelenken gebildeten Führung von der Schleifkontaktlage in eine Verwahrlage überführt werden, beispielsweise, falls das Schienenfahrzeug in anderer Art und Weise mit Strom versorgt werden soll. So kann beispielsweise durch eine erweiterte Nutzung von Schienennetzen mit Fahrzeugen, die entsprechende Stromabnehmer aufweisen, bei einem netzübergreifenden Verkehr dieser Schienenfahrzeuge ein Wechsel zwischen unterschiedlichen Energieversorgungssystemen erforderlich werden. Daher können die betreffenden Schienenfahrzeuge mit weiteren Stromabnehmern für abweichende Stromschienensysteme ausgestattet sein, um diese für die jeweiligen Schienenwege nutzbar zu machen. Es kann daher vorkommen, dass keine Energieübertragung mit einem Stromabnehmer erfolgen soll, sodass der betreffende Stromabnehmer bzw. dessen Schleifstückeinrichtung von der Stromschiene zu trennen und in eine Verwahrlage am Schienenfahrzeug zu überführen ist. Auch wenn nur ein Teil der Stromabnehmer eines Schienenfahrzeugs zur Stromübertragung genutzt werden soll, ist es angebracht, die nicht genutzten Stromabnehmer bzw. Schleifstücke von der betreffenden Stromschiene zu trennen, um die jeweiligen Schleifstücke nicht unnötig zu verschleißen.

Bekannte Stromabnehmer weisen zwar oftmals eine Andruckvorrichtung für die Schleifstückeinrichtung auf, die in Schleifkontaktlage des Schleifstücks das Schleifstück an die Stromschiene andrückt und Bewegungen des Schienenfahrzeugs ausgleicht und mechanische Überbeanspruchungen des Stromabnehmers, beispielsweise hervorgerufen durch Stöße aufgrund hoher Geschwindigkeit, minimiert. Jedoch ist es auch notwendig die Schleifstückeinrichtung in Verwahrlage sicher am Schienenfahrzeug zu haltern, um eine Entriegelung aufgrund von Belastungen durch den Betrieb des Schienenfahrzeugs und ein ungewolltes Überführen der Schleifstückeinrichtung von der Verwahrlage in die Schleifkontaktlage zu vermeiden.

Der Erfindung liegt daher die Aufgabe zugrunde eine Vorrichtung und ein Verfahren vorzuschlagen, die bzw. das eine einfache und sichere Arretierung der Schleifstückeinrichtung eines Stromabnehmers in Verwahrlage ermöglicht.

Diese Aufgabe wird durch eine Feststellvorrichtung mit den Merkmalen des Anspruchs 1, einen Stromabnehmer mit den Merkmalen des Anspruchs 14 und ein Verfahren mit den Merkmalen des Anspruchs 15 gelöst.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen.

Die erfindungsgemäße Feststellvorrichtung zur Sicherung einer zwischen einer Verwahrlage und einer Schleifkontaktlage relativ zu einer Stromschiene beweglichen Schleifstückeinrichtung eines Stromabnehmers in Verwahrlage weist einen Nocken, eine drehbar gelagerte Welle und eine Verdrehsicherung auf. Erfindungsgemäß ist der Nocken drehfest an der Welle angeordnet und kann durch Drehung der Welle von einer Freigabeposition des Nockens, in der der Nocken eine Bewegung der Schleifstückeinrichtung freigibt, in eine Feststellposition des Nockens, in der der Nocken die Schleifstückeinrichtung in Verwahrlage abstützt, bewegt werden. Sofern das Schleifstück der Schleifstückeinrichtung von der Stromschiene getrennt und die Schleifstückeinrichtung in Verwahrlage überführt wurde, kann der Nocken durch eine Drehbewegung der Welle in die Feststellposition des Nockens überführt werden. In Feststellposition liegt der Nocken derart am Stromabnehmer, bevorzugt an einer Wippeneinheit des Stromabnehmers, mit einer ersten Anlagefläche an, dass eine Bewegung der Schleifstückeinrichtung relativ zur Stromschiene gesperrt ist. Das heißt mit anderen Worten, dass der Nocken durch Anlage mit seiner ersten Anlagefläche am Stromabnehmer ein Zurücckehren der Schleifstückeinrichtung von der Verwahrlage in die Schleifkontaktlage verhindert. Zur Sicherung des Nockens in der Freigabeposition oder Feststellposition wird die Drehbewegung der Welle mittels der Verdrehsicherung formschlüssig gesperrt. Somit ist es durch das erfindungsgemäße Zusammenwirken von Verdrehsicherung, Nocken und Welle möglich anhand der Sicherung des Nockens in der Feststellposition und Sperrung der Drehbewegung der Welle die Schleifstückeinrichtung in Verwahrlage gesichert werden.

Bevorzugt wird die erfindungsgemäße Feststellvorrichtung an einem Stromabnehmer angeordnet, welcher eine Andruckvorrichtung mit einem Schleifstückeinrichtung, deren Schleifstück eine Schleifkontaktfläche ausbildet, und eine Wippeneinheit umfasst, wobei mittels einer schwenkbar ausgebildeten Wippe der Wippeneinheit und einer Federeinrichtung der Andruckvorrichtung eine Druckkraft auf die an der Wippe angeordnete Schleifstückeinrichtung ausgebildet wird, wodurch das Schleifstück relativ zu einer Stromschiene bewegt und zur Ausbildung eines Schleifkontakts mit einer anforderungsgemäßen Andruckkraft in eine Schleifkontaktlage gegen die Stromschiene gedrückt werden kann. Die Wippeneinheit der Andruckvorrichtung kann drehbeweglich ausgebildet sein, sodass die unbelastete Wippe mit der daran befestigten Schleifstückeinrichtung von einer Verwahrlage in eine Schleifkontaktlage an der Stromschiene gebracht werden kann. Die anforderungsgemäße Andruckkraft kann durch eine Federeinrichtung aufgebracht werden. Die Federeinrichtung kann ein mechanisches, pneumatisches oder hydraulisches Federelement aufweisen, welches geeignet ist, die Andruckkraft aufzubringen. Die Wippeneinheit ermöglicht demnach eine Bewegung des Schleifstücks bzw. der Schleifstückeinrichtung zwischen der Schleifkontaktlage und der Verwahrlage. Die Wippe der Wippeneinheit kann dabei an einem einfachen Drehgelenk schwenkbar gelagert sein oder auch aus mehreren Gelenken gebildet sein, die ihrerseits jeweils an einem Drehpunkt gelagert sind. Es ist denkbar, dass die erfindungsgemäße Feststellvorrichtung an der Wippeneinheit des Stromabnehmers angeordnet ist und der Nocken der Feststellvorrichtung in Feststellposition die Wippeneinheit des Stromabnehmers derart abstützt, dass die Schleifstückeinrichtung in Verwahrlage gesichert ist.

Unter dem Begriff "Verdrehsicherung" wird im Rahmen der Erfindung jegliche Einrichtung verstanden, die eine Drehung der Welle der Feststellvorrichtung um deren Drehachse unter Ausbildung eines Formschlusses zuverlässig sperrt. Denn insbesondere ein Formschluss kann eine hohe Übertragbarkeit von Kräften sowie eine einfache Lösung der Verbindung zulassen, um die Welle wieder frei zu geben. Somit kann der Nocken in dessen Freigabeposition oder Feststellposition durch Ausbildung des Formschlusses der Verdrehsicherung mit der Welle, an welcher der Nocken drehfest angeordnet ist, gesichert werden und zudem die Welle durch Aufhebung des Formschlusses zwischen Verdrehsicherung und Welle wieder freigegeben werden, um den Nocken von der Freigabeposition in die Feststellposition oder von der Feststellposition in die Freigabeposition zu überführen.

Die Verdrehsicherung kann einen innerhalb der Welle entlang der Drehachse der Welle angeordneten Stift, einen Bolzen und eine gegenüber der Welle feststehende Buchse aufweisen. Um eine Drehbewegung anforderungsgemäß sperren zu können, kann der Bolzen senkrecht zur Drehachse der Welle in den Stift eingebracht sein und derart in eine Ausnehmung der die Welle und den Stift zumindest teilweise umgreifenden Buchse einbringbar sein, dass eine formschlüssige Verbindung von Bolzen und Buchse ausgebildet wird. Bevorzugt ist der Bolzen zur Ausbildung des Formschlusses zwischen Bolzen und Buchse entlang der Drehachse der Welle in die zumindest eine Ausnehmung der Buchse einschiebbar. Es ist denkbar, dass die Drehachse der Welle und die Längsachse des innerhalb der Welle angeordneten Stiftes zusammenfallen. Um eine besonders zuverlässige Sicherung der Drehbewegung der Welle zu erzielen, kann der Bolzen sowohl die Welle als auch den Stift durchgreifen.

Es ist dem Fachmann verständlich, dass zur Überführung des Nockens von der Feststellposition in die Freigabeposition oder von der Freigabeposition in die Feststellposition die Welle bei zumindest teilweisem Umgreifen der Buchse der Welle drehbeweglich innerhalb der Buchse angeordnet sein muss. Die Buchse selbst kann zur Ermöglichung der Sperrung der Drehbewegung der Welle über den Bolzen unabhängig von der Welle an einem weiteren Bauteil der Feststellvorrichtung, des Stromabnehmers oder des Schienenfahrzeugs festgelegt sein. Somit kommt vorteilhafterweise zur Sperrung der Drehbewegung der Welle der Bolzen formschlüssig in einer Ausnehmung der feststehenden Buchse zum Eingriff, wobei der Bolzen mittels des Stiftes in Eingriff oder außer Eingriff, bevorzugt durch Verschieben des Stiftes innerhalb der Welle entlang der Drehachse der Welle oder entgegen der Drehachse der Welle, gebracht werden kann.

Besonders vorteilhaft ist es, wenn der Stift innerhalb der Welle federgelagert ist und entgegen der Federkraft entlang der Drehachse der Welle verschoben werden kann. Bevorzugt erfolgt dann die Sperrung der Welle durch Verschieben des Stiftes entgegen der Federkraft entlang der Drehachse der Welle aufgehoben, während die Sperrung der Welle durch Verschieben des Stiftes und durch Einbringen des Bolzens in die Ausnehmungen der Buchse aufgrund der Federkraft erfolgen kann. Der mit dem Stift verbundene Bolzen kann aufgrund der Federkraft in die zumindest eine Ausnehmung der Buchse einspringen bzw. einrasten.

Weiter hat es sich als vorteilhaft erwiesen, wenn der in den Stift eingebrachte Bolzen innerhalb einer in die Welle eingebrachten Nut verschoben werden kann. Die Nut begrenzt vorteilhafterweise den Weg des Bolzens und somit auch des Stiftes innerhalb der Welle. Bevorzugt begrenzen zwei in die Welle eingebrachte Nuten, die um 180 ° versetzt über den Außenumfang der Welle angeordnet sind, den Weg eines die Welle durchgreifenden Bolzens.

Entlang des Umfangs der Buchse können zumindest zwei Ausnehmungen zur Feststellung des Nockens in der Feststellposition und/oder der Freigabeposition angeordnet sein. Die Feststellposition und die Freigabeposition bzw. die Weglänge zwischen Feststell- und Freigabeposition kann in Abhängigkeit der Anordnung der Ausnehmungen am Außenumfang der Buchse definiert werden. Bevorzugt sind zumindest zwei Ausnehmungen mit einem Winkel von 90 Grad zueinander versetzt über den Außenumfang der Buchse angeordnet. Dadurch kann der Nocken bei Eingriff in die erste Ausnehmung beispielsweise in der Freigabeposition arretiert und nach Verstellung um 90 Grad bei Eingriff in die zweite Ausnehmung in der Feststellposition arretiert werden. Mit anderen Worten kann der Nocken jeweils nach Drehung des Nockens um 90 ° festgelegt werden kann. Weiter bevorzugt sind vier Aussparungen gleichmäßig, das heißt beispielsweise bei einer zylindrischen, die Welle umgreifenden Buchse im Abstand von 90 Grad zueinander, über den Außenumfang der Buchse verteilt. Somit kann ein die Welle durchgreifender Bolzen zur Arretierung der Drehbewegungen der Welle und Festlegung einer Position des Nockens jeweils in zwei Ausnehmungen, die gegenüberliegend angeordnet sind, eingreifen. Zum einfachen Einführen des Bolzens in die Ausnehmungen können die Ausnehmungen schlitzartig ausgebildet sein.

Wenn die Ausnehmung zumindest eine Einführschräge aufweist, anhand derer der Bolzen in die Ausnehmung eingeleitet werden kann, kann der Bolzen in einfacher Art und Weise und unter minimalem Widerstand bei einer Positionsänderung des Nockens in die Ausnehmung hineingleiten. Bevorzugt ist eine Einführschräge in der Art einer Fase ausgebildet.

Um die Schleifstückeinrichtung in Verwahrlage weiter zu sichern, kann der Nocken mit einer zweiten Anlagefläche am Stromabnehmer am Stromabnehmer und/oder an einem Gehäuse der Feststellvorrichtung und/oder an einer Halteeinrichtung der Feststellvorrichtung zur Anlage gebracht werden. Dadurch können Kräfte, insbesondere aufgrund von Beschleunigungen auf die Schleifstückeinrichtung und/oder die Wippeneinheit übertragene Kräfte, auf ein Gehäuse der Feststellvorrichtung oder auf den Stromabnehmer, insbesondere dessen Trägervorrichtung oder Andruckvorrichtung, oder das Schienenfahrzeug übertragen werden. Es ist denkbar, dass die Halteeinrichtung einen Teil des Gehäuses der Feststellvorrichtung ausbildet und/oder mit dem Gehäuse verbunden ist.

Die Drehachse der Welle und die Drehachse der Wippeneinheit können parallel und/oder beabstandet zueinander verlaufen. Bevorzugt verläuft die Drehachse der Welle der Feststellvorrichtung parallel zur Drehachse der Wippeneinheit und ist von dieser beabstandet.

Zur Lagerung, insbesondere zur drehfesten Lagerung, der Buchse gegenüber der Welle der Feststellvorrichtung, kann an der Buchse eine Befestigungsplatte angeordnet sein. Die Befestigungsplatte kann mit einer lösbaren Verbindung, bevorzugt einer Schraubverbindung, an einer Halteeinrichtung der Feststellvorrichtung angeordnet sein. Die Halteeinrichtung der Feststellvorrichtung ist mit dem Stromabnehmer und/oder dem Schienenfahrzeug verbunden, an welchem die Feststellvorrichtung angeordnet ist. Es hat sich als vorteilhaft erwiesen, wenn die Halteeinrichtung zudem die Welle der Feststellvorrichtung lagert. Es ist denkbar, dass die Halteeinrichtung der Feststellvorrichtung zumindest teilweise durch ein Bauteil des Stromabnehmers, beispielsweise dessen Andruckvorrichtung oder Trägervorrichtung, ausgebildet ist. Gemäß einer bevorzugten Ausführungsform der Befestigungsplatte weist die Befestigungsplatte zwei Augen auf, wovon ein Auge die Welle umschließt und das andere der Durchführung eines Verbindungsmittels, bevorzugt einer Schraube, dient. Gemäß dieser Ausführungsform ist am ersten, die Welle umschließenden Auge der Befestigungsplatte die Buchse derart angeordnet, dass die Welle die Buchse und die Befestigungsplatte durchgreift. Zur Feinjustierung der Befestigungsplatte und zur Ausrichtung gegenüber der Halteeinrichtung können Unterlegscheiben, insbesondere bei der Befestigung mittels einer Schraubverbindung, eingesetzt werden. Zudem können Unterlegscheiben die Sicherheit der lösbaren Verbindung erhöhen.

Zur einfachen Bedienung der Verdrehsicherung der Feststellvorrichtung kann die Welle an einem Ende eine prismatische Außenkontur, bevorzugt in der Form eines Vierkants, aufweisen. Zur Betätigung der Welle und somit des Nockens kann ein komplementär zur prismatischen Außenkontur der Welle ausgebildetes Werkzeug, beispielsweise ein komplementär zur prismatischen Außenkontur ausgebildeter Schlüssel oder eine Nuss, eingesetzt werden. Bevorzugt ist der Stift in ein Ende der Welle eingebracht, wobei an dem Ende, in das der Stift eingebracht ist, bevorzugt die prismatische Außenkontur an der Welle vorgesehen ist. Weiter bevorzugt weist der Abschnitt der Welle, der zwischen Buchse oder Befestigungsplatte und Wellenende bzw. Wellenstirnseite liegt, die prismatische Außenkontur auf. Dadurch kann die prismatische Außenkontur zugleich einen Anschlag für die Buchse und/oder die Befestigungsplatte ausbilden.

Es ist denkbar, dass der Stift bei Sperrung der Drehbewegung der Welle entlang der Drehachse der Welle über eine Wellenstirnseite bzw. ein Ende der Welle hinausragen kann. Durch Betätigung des herausragenden Endes des Stiftes, insbesondere durch Einschieben des herausragenden Endes des Stiftes in die Welle, kann der Formschluss zwischen Bolzen und Buchse gelöst werden, indem der Bolzen aus der zumindest einen Ausnehmung der Buchse hinausgeführt wird. Vorteilhafterweise kann zudem durch einfache visuelle Inspektion anhand des über die Welle hinausragenden Stiftabschnitts erkannt werden, in welchem Zustand sich die Verdrehsicherung befindet. Ragt der Stift über die Welle hinaus, so befindet sich der Bolzen mit den Ausnehmungen der Buchse formschlüssig im Eingriff und eine Drehbewegung der Welle ist gesperrt. Entsprechend ist eine Drehbewegung der Welle freigegeben, falls der Stift in die Welle eingeschoben ist und daher kein Formschluss zwischen Bolzen und Ausnehmungen der Buchse besteht. Bevorzugt entspricht die Länge der Bohrung, welche in die Welle zur Aufnahme des Stiftes eingebracht ist, zumindest der Länge des Stiftes. Dementsprechend entspricht der Bewegungsweg des Stiftes innerhalb der Welle zumindest der Länge des über die Wellenstirnseite hinausragenden Stiftabschnitts. Der bei Sperrung der Drehbewegung der Welle über die Stirnseite der Welle hinausragende Abschnitt des Stiftes kann einen kleineren Durchmesser oder einen anderen Querschnitt als der Rest des Stiftes aufweisen und daher auch als Stiftfortsatz bezeichnet werden. Weiter bevorzugt ragt der Stift bei Sperrung der Drehbewegung der Welle entlang der Drehachse der Welle über die Wellenstirnseite hinaus, an deren Ende die Welle eine prismatische Außenkontur aufweist. Vorteilhafterweise kann dann ein komplementär zur prismatischen Außenkontur der Welle ausgebildetes Werkzeug an der prismatischen Außenkontur aufgesetzt werden und zugleich mit diesem Werkzeug der Stift zur Freigabe der Drehbewegung der Welle in die Welle hineingeschoben werden, um anschließend mit dem Werkzeug den Nocken durch Drehung der Welle zu verstellen.

Zum Schutz der Verdrehsicherung kann die Feststellvorrichtung ein Verdrehsicherungsgehäuse umfassen, das am Außenumfang der Welle angeordnet ist. Um den Schutz der Verdrehsicherung zu gewährleisten sollte das Verdrehsicherungsgehäuse die Verdrehsicherung zumindest teilweise umschließen und so vor äußeren Einflüssen, beispielsweise Staub, Abrieb, Schmiermittel und/oder Fluiden, schützen. Bevorzugt umschließt das Verdrehsicherungsgehäuse die Buchse oder den Bolzen. Weiter bevorzugt umschließt das Verdrehsicherungsgehäuse die Buchse und den Bolzen. Es ist denkbar, dass das Verdrehsicherungsgehäuse zylindrisch ausgebildet ist und sowohl auf die Welle als auch auf die Buchse aufgeschoben werden kann. Weiter kann das Verdrehsicherungsgehäuse in die Ausnehmung der Halteeinrichtung eingeschoben sein, in der auch die Buchse und die Welle angeordnet sind. Um eine ungewolltes Verschieben des Verdrehsicherungsgehäuses entlang der Drehachse der Welle auszuschließen kann das Verdrehsicherungsgehäuse kann auf einer Seite des Verdrehsicherungsgehäuses der Nocken und auf der anderen Seite die Halteeinrichtung als Anschlag dienen.

Zur sicheren Verbindung des Nockens mit der Welle kann der Nocken mittels einer die Welle durchgreifenden Schraubverbindung drehfest an der Welle angeordnet sein.

Der erfindungsgemäße Stromabnehmer zur Energieübertragung von einer Stromschiene auf ein Fahrzeug umfasst eine erfindungsgemäße Feststellvorrichtung, wobei der Stromabnehmer zumindest eine Trägervorrichtung, eine Schleifstückeinrichtung und eine Andruckvorrichtung mit einer Wippeneinheit umfasst. Die Trägervorrichtung dient der Befestigung des Stromabnehmers am Fahrzeug. Mittels der Andruckvorrichtung kann die Schleifstückeinrichtung des Stromabnehmers relativ zur Stromschiene bewegt werden und zur Ausbildung eines Schleifkontaktes mit einer Andruckkraft in Schleifkontaktlage gegen die Stromschiene gedrückt werden. Weitere vorteilhafte Ausführungsformen eines Stromabnehmers ergeben sich aus den Merkmalsbeschreibungen der auf den Vorrichtungsanspruch 1 zurückbezogenen Unteransprüche.

Bei dem erfindungsgemäßen Verfahren zur Sicherung einer zwischen einer Verwahrlage und einer Schleifkontaktlage relativ zu einer Stromschiene beweglichen Schleifstückeinrichtung eines Stromabnehmers in Verwahrlage mittels einer Feststellvorrichtung, welche zumindest einen Nocken, eine drehbar gelagerte Welle und eine Verdrehsicherung aufweist, kann eine Drehbewegung der Welle zur Verstellung des drehfest an der Welle angeordneten Nockens mittels der Verdrehsicherung freigegeben werden und nachfolgend, nachdem die Schleifstückeinrichtung in Verwahrlage gebracht wurde, der Nocken von einer Freigabeposition in eine Feststellposition durch Drehung der Welle überführt werden und am Stromabnehmer, bevorzugt an einer Wippeneinheit des Stromabnehmers, mit einer ersten Anlagefläche derart zur Anlage gebracht werden, dass eine Bewegung der Schleifstückeinrichtung relativ zur Stromschiene gesperrt wird. Nachdem die Schleifstückeinrichtung in Verwahrlage überführt wird und der Nocken von einer Freigabeposition in eine Feststellposition überführt wurde, kann die Drehbewegung der Welle zur Sicherung des Nockens in der Feststellposition mittels der Verdrehsicherung formschlüssig gesperrt werden.

Weitere vorteilhafte Ausführungsformen des Verfahrens ergeben sich aus den Merkmalsbeschreibungen des Vorrichtungsanspruchs 1 und der auf den Vorrichtungsanspruch 1 rückbezogenen Unteransprüche. Ebenfalls beziehen sich sämtliche zu der Vorrichtung offenbarten Merkmale und Ausführungsformen in äquivalenter, wenn auch nicht wortgleicher Art und Weise auf das erfindungsgemäße Verfahren. Hierbei versteht es sich insbesondere, dass sprachübliche Umformungen und/oder ein sinngemäßes Ersetzen von jeweiligen Begrifflichkeiten im Rahmen der üblichen sprachlichen Praxis. Insbesondere das Verwenden von durch die allgemein anerkannte Sprachliteratur gestützten Synonyme, von dem vorliegenden Offenbarungsgehalt umfasst, ohne in ihre jeweiligen Ausformulierungen explizit erwähnt zu werden.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen. Ebenfalls versteht es sich, dass die zuvor genannten und nachstehend noch zu erläuternden Ausführungsformen und Ausführungsbeispiele sich in äquivalenter oder zumindest ähnlicher Art und Weise auf das erfindungsgemäße Verfahren beziehen, ohne für dieses separat genannt zu werden.

Ausführungsformen der Erfindung sind in den Zeichnungen schematisiert dargestellt und werden nachfolgend beispielhaft erläutert.

Es zeigen:
- **Fig. 1**: eine Seitenansicht eines Stromabnehmers mit einer Schleifstückeinrichtung in Schleifkontaktlage;
- **Fig. 2**: eine Seitenansicht des Stromabnehmers aus **Fig. 1** mit der Schleifstückeinrichtung in Verwahrlage;
- **Fig. 3**: eine Schnittansicht einer erfindungsgemäße Feststellvorrichtung mit einem Nocken in Feststellposition;
- **Fig. 4**: eine isometrische Ansicht einer erfindungsgemäßen Feststellvorrichtung gemäß **Fig. 3** in einer Schnittansicht mit dem Nocken in Freigabeposition;
- **Fig. 5**: einen Längsschnitt durch eine erfindungsgemäße Feststellvorrichtung gemäß **Fig. 3** mit einer Welle im gesperrten Zustand;
- **Fig. 6**: einen Längsschnitt durch die Feststellvorrichtung aus **Fig. 5** mit einer Welle im freigegebenen Zustand;
- **Fig. 7**: Detail Y der Feststellvorrichtung aus **Fig. 5****;**
- **Fig. 8**: Detail Z der Feststellvorrichtung aus **Fig. 6****;** und
- **Fig. 9**: eine Verdrehsicherung einer erfindungsgemäßen Feststellvorrichtung in perspektivischer Ansicht.

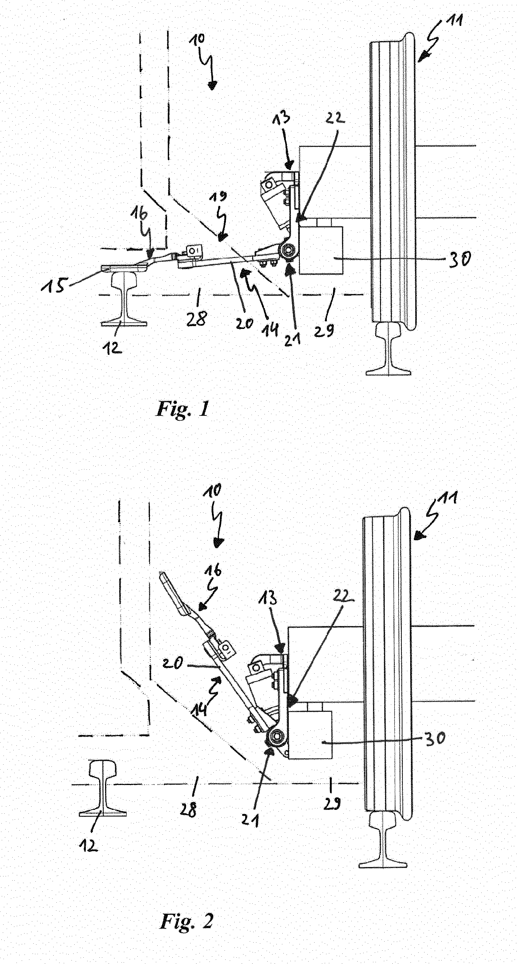

Eine Zusammenschau der **Fig. 1** und **2** zeigt einen Stromabnehmer 10 zwischen Rädern 11 eines hier nicht näher dargestellten Schienenfahrzeugs an einer Stromschiene 12. Der Stromabnehmer 10 umfasst eine Trägervorrichtung 13 und eine Andruckvorrichtung 14 sowie eine Schleifstückeinrichtung 16 mit einem Schleifstück 15. Die Trägervorrichtung 13 dient zur Befestigung des Stromabnehmers in dem hier nicht näher dargestellten Fahrzeug. Das Schleifstück 15 ist mit der Andruckvorrichtung 14 verbunden und liegt an der Stromschiene 12 in der dargestellten Schleifkontaktlage an. Eine Schleifkontaktfläche des Schleifstücks 15 liegt in der hier gezeigten Ausführungsform auf einer Oberfläche der Stromschiene 12 auf, sodass ein elektrischer Kontakt zwischen Stromabnehmer 10 und Stromschiene 12 hergestellt ist. Es ist jedoch auch denkbar, dass das Schleifstück 15 von unterhalb der Stromschiene 12 an der Stromschiene 12 zur Anlage gebracht wird.

Die Andruckvorrichtung 14 drückt das Schleifstück 15 mit einer Andruckkraft gegen die Stromschiene 12, wobei die Andruckvorrichtung 14 eine Wippeneinheit 19 zur Ausbildung der Andruckkraft mit einer Wippe 20 und einer Federeinrichtung 21 umfasst. Weiter umfasst die Andruckvorrichtung 14 eine Befestigungseinrichtung 22, die die Federeinrichtung 21 mit der Trägervorrichtung 13 verbindet. Die Federeinrichtung 21 kann beispielsweise aus einer hier nicht dargestellten Schraubenfeder und einer Achse gebildet sein, wobei die Schraubenfeder drehfest mit der Achse verbunden ist. Die Wippeneinheit 19 bildet eine drehbeweglich gelagerte Hülse aus, die die Federeinrichtung 21 bzw. die Schraubenfeder und die Achse umgibt. Insbesondere ist die Wippe 20 an der Hülse angeordnet bzw. verschraubt, sodass eine Drehung der Hülse auf der Achse bzw. Schraubenfeder ein Verschwenken der Wippe 20 und der Schleifstückeinrichtung 16 bewirkt. Die Federeinrichtung 21 ist ausgebildet, dass die Andruckkraft alleine in Richtung der Stromschiene ausgeübt wird. Mittels der Schwenkeinrichtung der Wippeneinheit 19 kann die Wippe 20 zusammen mit der Schleifstückeinrichtung 16 zwischen der Schleifkontaktlage und einer in **Fig. 2** dargestellten Verwahrlage bewegt werden. Relativ bezogen auf einen Querschnitt des hier nicht dargestellten Schienenfahrzeugs befindet sich folglich die Andruckvorrichtung 14 mit der Schleifstückeinrichtung 16 in der Schleifkontaktlage in einem erweiterten Wirkbereich 28 an der Stromschiene 12 und in der Verwahrlage in einem reduzierten Wirkbereich 29. Dadurch ist es möglich einen wirksamen Querschnitt des Fahrzeugs zu verkleinern und so eventuelle Kollisionen mit Gegenständen oder Bauwerken zu verhindern. Die Nutzungsmöglichkeiten eines derartigen Schienenfahrzeugs auf unterschiedlichen Schienenwegen kann dann so wesentlich erweitert werden.

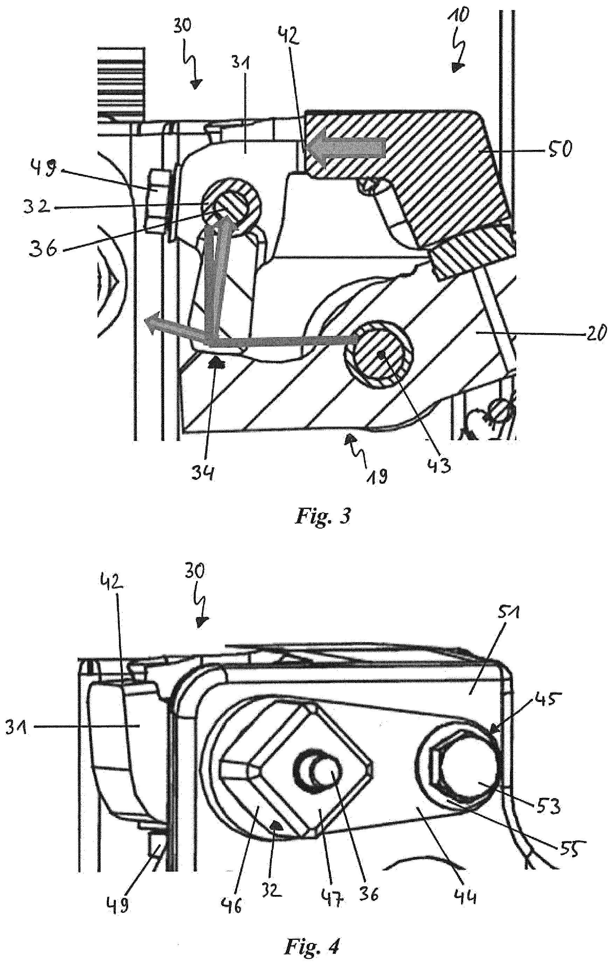

Aus der Zusammenschau der **Fig. 3** und **4** geht die Verstellung des Nockens zwischen einer Feststellposition und einer Freigabeposition hervor, wobei **Fig. 3** den Nocken in Feststellposition und **Fig. 4** den Nocken 31 in Freigabeposition zeigt. Der in **Fig. 3** dargestellten Schnittansicht der erfindungsgemäßen Feststellvorrichtung 30 kann entnommen werden, dass der Nocken mit einer ersten Anlagefläche 34 an der Wippe 20 der Wippeneinheit 19 zur Anlage gebracht ist und diese um die Drehachse 43 drehbare Wippeneinheit 19 in Verwahrlage abstützt. Zur zusätzlichen Sicherung der Wippeneinheit 19 in Verwahrlage kommt der Nocken 31 mit einer zweiten Anlagefläche 42 an einem Gehäuse 50 der Feststellvorrichtung 30 zur Anlage. Da der Nocken 31 drehfest über die Schraubverbindung 49 mit der Welle 32 verbunden ist, lässt sich der Nocken 31 durch Drehung der Welle 32 verschwenken. Zudem ist der innerhalb der Welle 32 geführte Stift 36 ersichtlich, der an der Stirnseite 47 der Welle 32 bei gesperrter Drehbewegung der Welle 32 hinausragt. Um die Feststellvorrichtung 30 mittels eines einfachen Werkzeugs bedienen zu können, ist das Ende der Welle 32, aus dem der Stift 36 hinausragt, mit einer prismatischen Außenkontur 46, vorliegend in der Form eines Vierkants, versehen. Insbesondere aus **Fig. 4** geht hervor, dass die hier nicht sichtbare Buchse 38, an der die Befestigungsplatte 44 angeordnet ist, über die Befestigungsplatte 44 und eine Schraubverbindung 45 mit der Halteeinrichtung 51 der Feststellvorrichtung 30 verbunden ist. Zur Feinjustierung der Befestigungsplatte 44 bzw. der Schraubverbindung 45 gegenüber der Welle 32 und der Buchse 38 ist zwischen der Befestigungsplatte 44 und der Schraube 53 eine Unterlegscheibe 51 angeordnet.

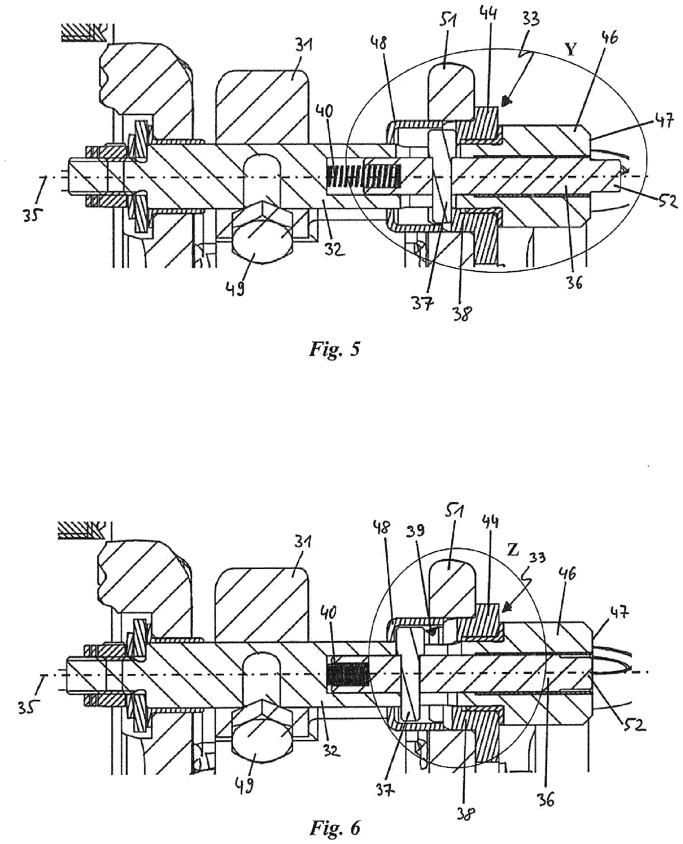

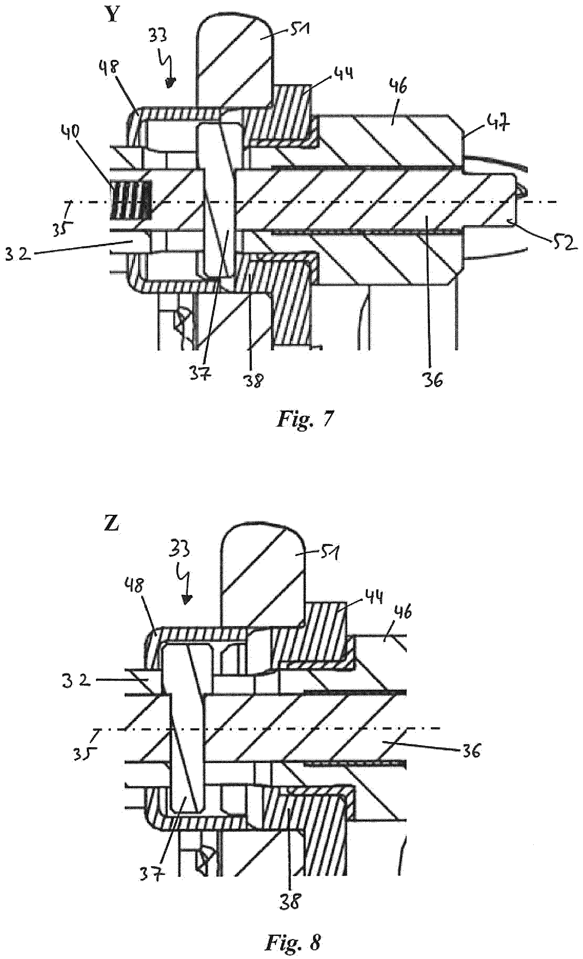

Die Zusammenschau der **Fig. 5** und **6** sowie der den **Fig. 5** und **6** entnommenen Details Y und Z, welche in den **Fig. 7** und **8** dargestellt sind, kann die Funktionsweise der Sperrung bzw. Freigabe der Drehbewegung der Welle 32 entnommen werden. **Fig. 5** zeigt die Feststellvorrichtung 30mit gesperrter Drehbewegung der Welle 32 während **Fig. 6** die Feststellvorrichtung 30 mit freigegebener Drehbewegung der Welle 32 zeigt. Es ist zu erkennen, dass die Welle 32 drehbar um die Drehachse 35 gelagert ist und der Nocken 31 zur Verstellung mittels der Welle 32 über eine Schraubverbindung 49 drehfest an der Welle 32 angeordnet ist. Die Verdrehsicherung 33 ist im Wesentlichen aus einer Buchse 38, einer daran angeordneten Befestigungsplatte 44, einem Stift 36, einem Bolzen 37, einer Feder 40 und einem Verdrehsicherungsgehäuse 48 aufgebaut. Der Stift 36 ist mittels der Feder 40 innerhalb der Welle 32 federgelagert und entlang der Drehachse der Welle 32 innerhalb der Welle 32 verschiebbar. Der Benutzer kann in einfacher Art und Weise erkennen, dass die Drehbewegung der Welle 32 in dem in Fig. 5 dargestellten Zustand gesperrt ist, da der Stift 36 über die Stirnseite 47 der Welle 32 hinausragt. Der über die Wellenstirnseite 47 hinausragende Abschnitt des Stiftes 36 weist erkennbar einen geringeren Durchmesser als der übrige Teil des Stiftes 36 auf und kann daher auch als Stiftfortsatz 52 bezeichnet werden. Bei Sperrung der Drehbewegung der Welle 32, wie in **Fig. 5** gezeigt, ist der Bolzen 37 in die Ausnehmungen 39 der Buchse 38 formschlüssig eingeführt und sperrt, da die Buchse 38 über die Befestigungsplatte 44 mit der feststehenden Halteeinrichtung 51 verbunden ist, eine Drehbewegung der Welle 32. Demgegenüber ist in **Fig. 6** der Zustand der Verdrehsicherung dargestellt, in dem die Drehbewegung der Welle 32 freigegeben ist. Der Stiftfortsatz 52 ist vollständig in die Welle 32 eingeführt, wodurch der Stift 36 bündig mit der Wellenstirnseite 47 abschließt und ein Benutzer visuell erkennen kann, dass die Drehbewegung der Welle 32 freigegeben ist. Das Einschieben des Stiftes 36 kann durch einfaches Aufsetzen eines entsprechenden Werkzeugs, das komplementär zur prismatischen Außenkontur 46 der Welle 32 ausgebildet ist, erfolgen, sodass neben dem Einschieben des Stiftes 36 in die Welle 32 mittels dieses Werkzeuges auch eine Drehbewegung der Welle 32 bewirkt werden kann. Durch Einschieben des Stiftes 36 entgegen der Federkraft der Feder 40 in die Welle 32 wird der Formschluss zwischen den Ausnehmungen 39 der Buchse 38 und Bolzen 37 aufgehoben, da der Bolzen 37 zusammen mit dem Stift 36 entlang der Drehachse 35 verschoben wird und in den Ausnehmungen 39 nicht weiter zum Eingriff kommt. Nach Einschieben des Stiftes 36 in die Welle 32 kann somit durch eine Drehbewegung der Welle 32 der Nocken 31 von einer Feststellposition in eine Freigabeposition oder von der Freigabeposition in die Feststellposition überführt werden.

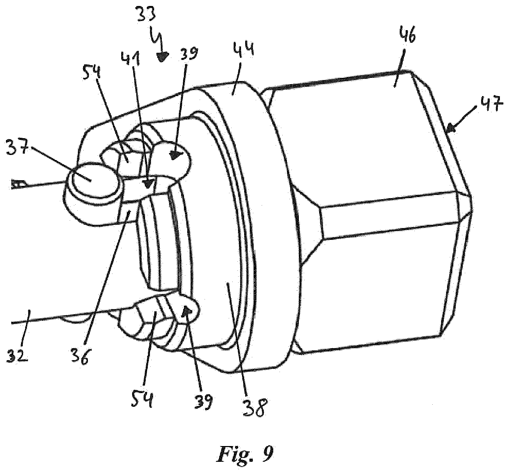

**Fig. 9** zeigt einen Abschnitt der Welle 32 mit der daran angeordneten Verdrehsicherung 33, wobei auf die Darstellungen des Verdrehsicherungsgehäuses 48 der Übersichtlichkeit halber verzichtet wurde. Wiederum ist zu erkennen, dass die Welle 32 an einem Endabschnitt eine prismatische Außenkontur 46 aufweist, an der ein hier nicht dargestelltes Werkzeug zum Eingriff kommen kann. Der Endabschnitt, der die prismatische Außenkontur 46 aufweist, erstreckt sich vorliegend von der Wellenstirnseite 47 bis zur Befestigungsplatte 44. Gemäß dem in Fig. 9 dargestellten Zustand der Verdrehsicherung 33 ist eine Drehbewegung der Welle 32 freigegeben, da der Bolzen 37 außerhalb der Ausnehmungen 39 angeordnet ist und somit keinen Formschluss mit der Buchse 38 eingeht. Wird jedoch der Stift 36 innerhalb der Welle 32 entlang der hier nicht dargestellten Drehachse 35 der Welle 32 über die Wellenstirnseite 47 hinausbewegt, dann wird der den Stift 36 und die Welle 32 durchgreifende Bolzen 37 innerhalb der Nut 41 verschoben und in die Ausnehmungen 39 der Buchse 38 eingeführt. Die Einführung des Bolzens 37 wird durch die Einführschrägen 54 wesentlich vereinfacht. Zudem ist in **Fig. 9** erkennbar, dass vier Ausnehmungen 39, wovon zumindest zwei sichtbar sind, über den Außenumfang der Buchse 38 in einem Winkel von 90 ° zueinander angeordnet sind. Das heißt, dass der Nocken 31 zur Überführung von der Freigabeposition in die Feststellposition oder von der Feststellposition in die Freigabeposition um 90 ° verschwenkt wird, da die Anordnung der Ausnehmungen in keiner anderen Stellung eine Sperrung der Drehbewegung der Welle 32 zulassen.

## Patentansprüche

1. Feststellvorrichtung (30) zur Sicherung einer zwischen einer Verwahrlage und einer Schleifkontaktlage relativ zu einer Stromschiene (12) beweglichen Schleifstückeinrichtung (16) eines Stromabnehmers (10) in Verwahrlage,
**dadurch gekennzeichnet,**
**dass** die Feststellvorrichtung (30) einen Nocken (31), eine drehbar gelagerte Welle (32) und eine Verdrehsicherung (33) aufweist, wobei der Nocken (31) drehfest an der Welle (32) angeordnet ist und der Nocken (31) durch Drehung der Welle (32) von einer Freigabeposition in eine Feststellposition bewegbar ist,
und wobei der Nocken (31) in Verwahrlage der Schleifstückeinrichtung (16) durch Überführung in die Feststellposition am Stromabnehmer (10), bevorzugt an einer Wippeneinheit (19) des Stromabnehmers (10), mit einer ersten Anlagefläche (34) derart zur Anlage bringbar ist, dass eine Bewegung der Schleifstückeinrichtung (16) relativ zur Stromschiene (12) gesperrt ist,
und wobei eine Drehbewegung der Welle (32) zur Sicherung des Nockens (31) in der Freigabeposition oder der Feststellposition mittels der Verdrehsicherung (33) formschlüssig gesperrt ist.

2. Feststellvorrichtung nach Anspruch 1,
**dadurch gekennzeichnet,**
**dass** die Verdrehsicherung (33) einen innerhalb der Welle (32) entlang der Drehachse (35) der Welle (32) angeordneten Stift (36), einen Bolzen (37) und eine gegenüber der Welle (32) feststehende Buchse (38) aufweist, wobei der Bolzen (37) senkrecht zur Drehachse (35) der Welle (32) in den Stift (36) eingebracht ist, und wobei der Bolzen (37) derart in zumindest eine Ausnehmung (39) der die Welle (32) und den Stift (36) zumindest teilweise umgreifenden Buchse (38) formschlüssig einbringbar ist, dass eine Drehbewegung der Welle (32) gesperrt ist.

3. Feststellvorrichtung nach Anspruch 2,
**dadurch gekennzeichnet,**
**dass** der Stift (36) innerhalb der Welle (32) federgelagert ist und entgegen der Federkraft einer Feder (40) entlang der Drehachse (35) der Welle (32) verschiebbar ist.

4. Feststellvorrichtung nach Anspruch 2 oder 3,
**dadurch gekennzeichnet,**
**dass** der in den Stift (36) eingebrachte Bolzen (37) innerhalb einer in die Welle (32) eingebrachten Nut (41) verschiebbar ist.

5. Feststellvorrichtung nach einem der Ansprüche 2 bis 4,
**dadurch gekennzeichnet,**
**dass** entlang des Umfangs der Buchse (38) zumindest zwei Ausnehmungen (39) zur Festlegung des Nockens (31) in der Feststellposition und/oder der Freigabeposition angeordnet sind.

6. Feststellvorrichtung nach einem der Ansprüche 2 bis 5,
**dadurch gekennzeichnet,**
**dass** die Ausnehmung (39) zumindest eine Einführschräge (54) aufweist.

7. Feststellvorrichtung nach einem der Ansprüche 1 bis 6,
**dadurch gekennzeichnet,**
**dass** der Nocken (31) mit einer zweiten Anlagefläche (42) am Stromabnehmer (10) und/oder an einem Gehäuse (50) der Feststellvorrichtung (30) und/oder an einer Halteeinrichtung (51) der Feststellvorrichtung (30) zur Anlage bringbar ist.

8. Feststellvorrichtung nach einem der Ansprüche 2 bis 7,
**dadurch gekennzeichnet,**
**dass** die Drehachse (35) der Welle (32) und die Drehachse (43) der Wippeneinheit (19) parallel und/oder beabstandet verlaufen.

9. Feststellvorrichtung nach einem der Ansprüche 2 bis 8,
**dadurch gekennzeichnet,**
**dass** an der Buchse (38) eine Befestigungsplatte (44) angeordnet ist, wobei die Befestigungsplatte (44) mit einer lösbaren Verbindung, bevorzugt einer Schraubverbindung (45), an einer Halteeinrichtung (51) angeordnet ist.

10. Feststellvorrichtung nach einem der Ansprüche 2 bis 9,
**dadurch gekennzeichnet,**
**dass** die Welle (32) an einem Ende eine prismatische Außenkontur (46), bevorzugt in der Form eines Vierkants, aufweist.

11. Feststellvorrichtung nach einem der Ansprüche 2 bis 10,
**dadurch gekennzeichnet,**
**dass** der Stift (36) bei Sperrung der Drehbewegung der Welle (32) entlang der Drehachse (35) der Welle (32) über eine Wellenstirnseite (47) hinausragt.

12. Feststellvorrichtung nach einem der Ansprüche 1 bis 11,
**dadurch gekennzeichnet,**
**dass** ein Verdrehsicherungsgehäuse (48) umfasst ist, das am Außenumfang der Welle (32) angeordnet ist und die Verdrehsicherung (33), insbesondere die Buchse (38) und/oder den Bolzen (37), zumindest teilweise umschließt.

13. Feststellvorrichtung nach einem der Ansprüche 2 bis 12,
**dadurch gekennzeichnet,**
**dass** der Nocken (31) mittels einer die Welle (32) durchgreifender Schraubverbindung (49) drehfest an der Welle (32) angeordnet ist.

14. Stromabnehmer (10) zur Energieübertragung von einer Stromschiene (12) auf ein Fahrzeug, mit einer Feststellvorrichtung (30) nach einem der vorangehenden Ansprüche,
**dadurch gekennzeichnet,**
**dass** der Stromabnehmer (10) eine Schleifstückeinrichtung (16) und eine Andruckvorrichtung (14) mit einer Wippeneinheit (19) umfasst, wobei mittels der Andruckvorrichtung (14) die Schleifstückeinrichtung (13) des Stromabnehmers (10) relativ zur Stromschiene (12) bewegbar und zur Ausbildung eines Schleifkontaktes mit einer Andruckkraft in einer Schleifkontaktlage gegen die Stromschiene (12) andrückbar ist.

15. Verfahren zur Sicherung einer zwischen einer Verwahrlage und einer Schleifkontaktlage relativ zu einer Stromschiene (12) beweglichen Schleifstückeinrichtung (16) eines Stromabnehmers (10) in Verwahrlage mittels einer Feststellvorrichtung (30), welche zumindest einen Nocken (31), eine drehbar gelagerte Welle (32) und eine Verdrehsicherung (33) aufweist,
**dadurch gekennzeichnet,**
**dass** eine Drehbewegung der Welle (32) zur Verstellung des drehfest an der Welle (32) angeordneten Nockens (31) mittels der Verdrehsicherung (33) freigegeben wird,
und nachfolgend der Nocken (31) in Verwahrlage der Schleifstückeinrichtung (16) von einer Freigabeposition in eine Feststellposition durch Drehung der Welle (32) überführt wird und am Stromabnehmer (10), bevorzugt an einer Wippeneinheit (19) des Stromabnehmers (10), mit einer ersten Anlagefläche (34) derart zur Anlage gebracht wird, dass eine Bewegung der Schleifstückeinrichtung (16) relativ zur Stromschiene (10) gesperrt wird,
und weiter nachfolgend eine Drehbewegung der Welle (32) zur Sicherung des Nockens (31) in der Feststellposition mittels der Verdrehsicherung (33) formschlüssig gesperrt wird.
